# EUROPEAN PATENT APPLICATION

(11) **EP 4 554 082 A1**
(43) Date of publication of application: **14.05.2025**
(21) Application number: 24211898.2
(22) Date of filing: 08.11.2024
(51) Int. Cl.: H02P 25/03

(54) **POWER MOVING PANEL SYSTEM**

(30) Priority: 10.11.2023 FR 2312288
(71) Applicant: Inteva Products, LLC, Troy, MI 48084 (US)
(72) Inventor: CONDAMINET, Vincent, 14220 Esson (FR); FARREYRE, Mathieu, 45400 Semoy (FR); GATIEN, Damien, 45400 Semoy (FR)
(74) Representative: Germain Maureau

(57) **Abstract**

A power moving panel system includes a motor system, a motor phase comparator circuit, and a microcontroller. The motor system includes a BLDC motor and a rotatable shaft configured to rotate in response to driving the BLDC motor. The motor system is configured to adjust a position of a moveable part in response to rotating the rotatable shaft. The motor phase comparator circuit is configured to determine a plurality of zero crossing occurrences of a first, second, and third BEMFs, produced in response to driving the motor. The microcontroller is in signal communication with the motor phase comparator circuit, and is configured to determine a rotational position of the rotatable shaft based on the counting of each zero crossing occurrence corresponding to each of the first, second, and third BEMFs. Accordingly, the microcontroller determines the position of the moveable part based on the rotational position of the rotatable shaft.

## Description

### BACKGROUND

Exemplary embodiments of the present disclosure pertain to the art of vehicle systems, and in particular, to a power moving panel system.

The use of the brushless technology for sunroof motor should bring to the customer many advantages such as acoustic noise comfort, low Radio-frequency interferences, low mass and small packaging. However, the use of the brushless technology signifies a higher cost for the electronic components with respect to a similar brushed motor, especially on the inverter side.

### BRIEF DESCRIPTION

Disclosed is a power moving panel system configured to operate a moveable panel automatically. The power moving panel system includes a motor system, a motor phase comparator circuit, and a microcontroller. The motor system includes a BLDC motor and a rotatable shaft configured to rotate in response to driving the BLDC motor. The motor system is configured to adjust a position of a moveable part in response to rotating the rotatable shaft. The motor phase comparator circuit is configured to determine a plurality of zero crossing occurrences of a first back electromotive force (BEMF), a second BEMF, and a third BEMF produced in response to driving the motor. The microcontroller is in signal communication with the motor phase comparator circuit, and is configured to determine a rotational position of the rotatable shaft based on the counting of each zero crossing occurrence corresponding to each of the first BEMF, the second BEMF and the third BEMF. The microcontroller determines the position of the moveable part based on the rotational position of the rotatable shaft and without using position sensors.

In addition to one or more of the features described above, or as an alternative to any of the foregoing embodiments, the microcontroller determines the position of the moveable part with an anti-pinch function as per Federal Motor Vehicle Safety Standard (FMVSS) No. 118 (FMVSS118) without using position sensors.

In addition to one or more of the features described above, or as an alternative to any of the foregoing embodiments, the microcontroller allows automatic closing and opening of the moveable part based on the position of the moveable part.

In addition to one or more of the features described above, or as an alternative to any of the foregoing embodiments, the microcontroller processes electrical BEMF signals representing the first, second, and third BEMFs, filters from the BEMF signals parasitic voltages caused by one or a combination of a vibration of the motor system and the BLDC motor, and determines the rotational position of the rotatable shaft based on the counted number of zero crossings without using a position sensor.

In addition to one or more of the features described above, or as an alternative to any of the foregoing embodiments, the motor phase comparator circuit comprises a comparator including a first input configured to receive the first BEMF and the second BEMF, a second input configured to receive the third BEMF, and an output configured to output a logic signal that transitions between one of a logic "0" value and a logic "1" value or a logic "1" value and a logic "0" value, either of the transitions indicating the zero crossing occurrence of the first BEMF, the second BEMF, and the third BEMF, respectively.

In addition to one or more of the features described above, or as an alternative to any of the foregoing embodiments, the microcontroller performs operations comprising determines when the motor is one of in synchronization or out of synchronization; detects a demagnetization pulse occurring in a current BEMF among one of the first BEMF, the second BEMF or the third BEMF when the motor is out of synchronization; generates a virtual zero crossing pulse in response to detecting the demagnetization pulse, the virtual zero crossing pulse producing the logic signal output from the comparator; and counts the logic signal output resulting from the virtual zero crossing pulse as the zero crossing occurrence of the current BEMF.

In addition to one or more of the features described above, or as an alternative to any of the foregoing embodiments, the movable part is a moveable panel.

In addition to one or more of the features described above, or as an alternative to any of the foregoing embodiments, the power moving panel system further comprises a gear system coupled to the rotatable shaft; and a panel regulator including a first end coupled to the gear system and a second end coupled to the moveable panel.

In addition to one or more of the features described above, or as an alternative to any of the foregoing embodiments, the panel regulator moves the panel in a first direction in response to rotating the rotatable shaft in a first rotational direction and moves the panel in a second direction in response to rotating the rotatable shaft in a second rotational direction opposite the first rotational direction.

In addition to one or more of the features described above, or as an alternative to any of the foregoing embodiments, the BLDC motor includes a first alternating current (AC) input configured to receive a first AC voltage having a first phase, a second AC input configured to receive a second AC voltage having a second phase, and a AC DC input configured to receive a third AC voltage having a third phase, the first, second, and third AC voltages being one-hundred and twenty (120) degrees out of phase with each other.

In addition to one or more of the features described above, or as an alternative to any of the foregoing embodiments, the first AC voltage produces the first BEMF, the second AC voltage produces the second BEMF, and the third AC voltage produces the third BEMF.

Also disclosed is a method for adjusting a position of a movable panel without using position sensors. The method comprises driving a brushless direct current (BLDC) motor and producing a first back electromotive force (BEMF), a second BEMF, and a third BEMF produced in response to driving the motor; rotating a rotatable shaft of the BLDC motor in response to driving the motor; and adjusting, by the motor system, a position of a moveable part in response to rotating the rotatable shaft. The method further comprises determining, by a motor phase comparator circuit, a plurality of zero crossing occurrences of the at least one back electromotive force (BEMF). The method further comprises determining, by a microcontroller in signal communication with the motor phase comparator circuit, a rotational position of the rotatable shaft based on the counting of each zero crossing occurrence corresponding to each of the first BEMF, the second BEMF and the third BEMF; and determining, by the microcontroller, the position of the moveable part based on the rotational position of the rotatable shaft.

### BRIEF DESCRIPTION OF THE DRAWINGS

The following descriptions should not be considered limiting in any way. With reference to the accompanying drawings, like elements are numbered alike:
FIG. 1 is a diagram depicting three-phase voltages associated with the back electromotive force (BEMF) of a motor included in the power moving panel system of FIG. 1 according to a non-limiting embodiment;
FIG. 2 is a diagram depicting zero crossing points associated with the BEMF according to a non-limiting embodiment;
FIG. 3 is a block diagram of a power moving panel system excluding position sensors according to a non-limiting embodiment;
FIG. 4 is a block diagram of an electronic control unit included in the power moving panel system of FIG. 1 according to a non-limiting embodiment;
FIG. 5 is a diagram depicting demagnetization pulses occurring during the commutation of the motor according to a non-limiting embodiment;
FIG. 6 is a flow diagram illustrating a method of generating virtual zero crossing pulses following the occurrence of demagnetization pulses in a nonsynchronized motor;
FIG. 7 depicts the occurrence of erroneous zero crossings caused by vibrations of a brushless motor, and the method to filter those;
FIG. 8 is flow diagram illustrating a method of filtering erroneous zero crossing pulses from the BEMF of a motor according to a non-limiting embodiment; and
FIG. 9 is a flow diagram illustrating a method of starting up a motor without using a position sensor according to a non-limiting embodiment.

### DETAILED DESCRIPTION

A detailed description of one or more embodiments of the disclosed apparatus and method are presented herein by way of exemplification and not limitation with reference to the Figures.

Sensorless control of brushless motors is commonly used with devices that do not require information of motor's exact position such as, for example, fans and pumps. Other applications, however, require information of the motor's rotational position in order to determine a position of a moving part that is controlled by the rotation of motor. For example, automotive power moving panels such as power windows, sunroofs, moonroofs, etc., utilize anti-pinch algorithms which require knowledge of the position of the glass panel. Traditionally, position sensors such as Hall-Effect sensors are used with the power window system to determine the position of the glass panel. The inclusion of Hall-Effect sensors increases the system cost. Therefore, the removal of the costly position sensors is a solution to bring the cost closer to the cost of a brushed motor. Moreover, the removal of the position sensors simplifies the overall design of the motor.

Various non-limiting embodiments describe herein provides a power moving panel system capable of precisely tracking the position of a brushless motor's rotor at all times, from startup to coasting on inertia after stopping, without using position sensors. In this manner, the position of a panel (window, sunroof, moonroof, etc.) can be tracked without using a sensor so as to provide various system features such as, for example, an anti-pinch protection feature. According to a non-limiting embodiment, the anti-pinch protection feature is performed automatically according to the Federal Motor Vehicle Safety Standard (FMVSS) No. 118 (FMVSS118). The anti-pinch protection feature can include, for example, automatically stopping movement of the moveable part and/or automatically reversing movement of the moveable part.

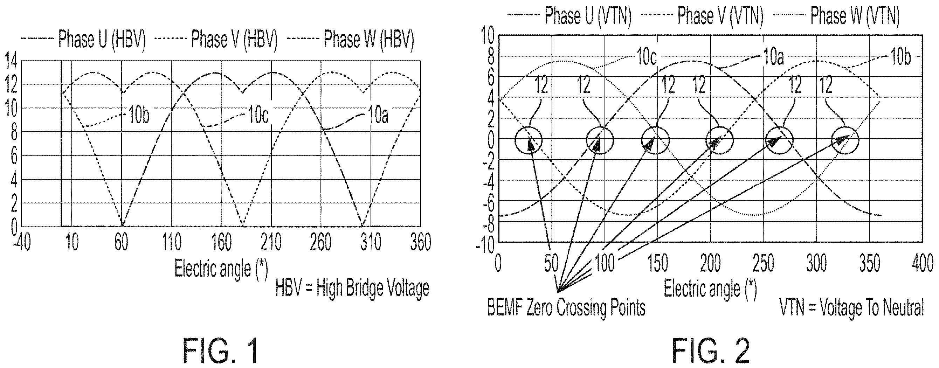

When a motor rotates, it generates a voltage that opposes the applied voltage or the direction of current flow in the motor windings. The opposing voltage is referred to as the "BEMF." In a three-phase brushless DC motor, a three-phase BEMF 10a, 10b and 10c is produced, where each phase 10a, 10b and 10c of the BEMF is shifted (e.g., 120 degrees) with respect to one another (see FIG. 1). A "zero crossing" 12 of each BEMF phase also occurs during a motor's rotation when the BEMF voltage crosses or passes through zero volts (see FIG. 2). This zero crossing 12 occurs when the magnetic field generated by the motor's rotor or armature aligns with the stator's windings in such a way that the induced voltage in the windings drops to zero.

Back Electromotive Force (BEMF) signals can be used in a sensorless brushless motor control systems to determine whether the system is in synchronization or out of synchronization. In synchronization (e.g., in sync), the BEMF signals are consistent and predictable when the rotor aligns with the stator's magnetic fields. This consistency allows the control system to accurately discern rotor position and generate precise commutation, resulting in efficient motor operation and the desired torque and speed. On the other hand, when the motor is out of synchronization (e.g., out of sync), BEMF signals become irregular and distorted, making it challenging for the control system to determine rotor position accurately. In this state, commutation is out of synchronization , leading to inefficient motor performance, reduced torque, increased vibration, and the risk of motor stalling or erratic behavior.

Achieving synchronization hinges on the reliability and consistency of BEMF signals, which serve as the primary source of rotor position information for sensorless control systems. Maintaining a consistent relationship between the rotor and stator's magnetic fields ensures accurate signal interpretation and proper motor function. However, rapid or significant deviations in rotor position can disrupt BEMF signal quality, making it harder for the control system to sustain synchronization.

In one or more non-limiting embodiments, the power moving panel system utilizes the back electromotive force (BEMF) to determine and track the rotational position of the motor shaft without using position sensors. The power moving panel system described herein is also capable of filtering parasitic pulses referred to as "demagnetization pulses" from the BEMF. In this manner, a more accurate rotational position of the motor can be obtained (e.g., the rotor or motor's shaft).

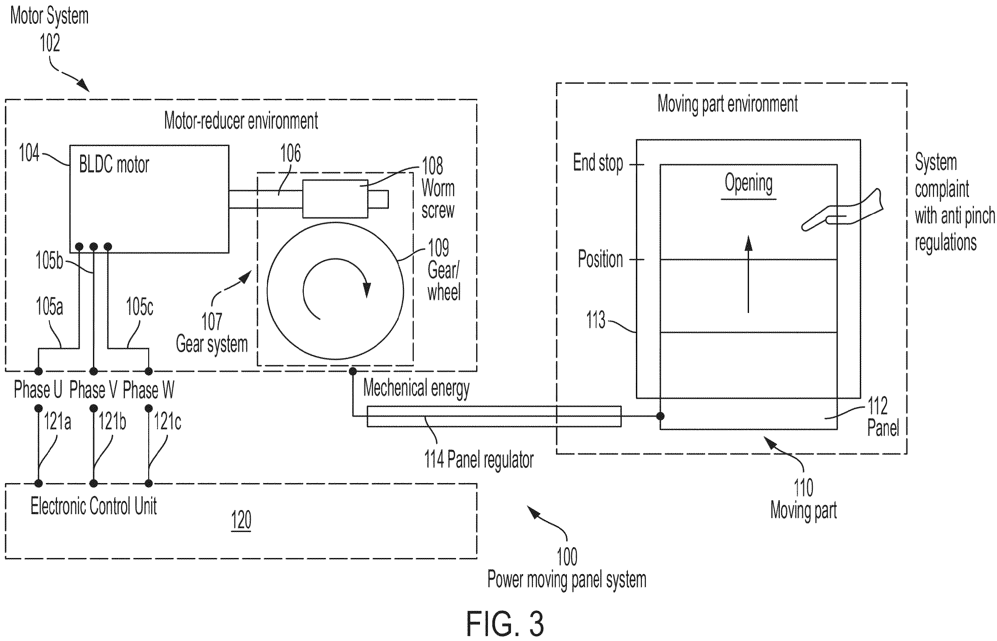

Turning now to FIG. 3, a power moving panel system 100 is illustrated according to a non-limiting embodiment of the present disclosure. The power moving panel system 100 includes a motor system 102 configured to move a moveable part 110, and an electronic control unit (ECU) 120. According to a non-limiting embodiment, the moveable part 110 includes an adjustable panel 112 supported in a frame 113. The adjustable panel 112 configured to move in a first direction and a second direction opposite the first direction so that it can be moved between a fully open position and a fully closed (end stop) position. The panel 112 can include, for example, a glass window, a sunroof, a moonroof, a moveable cover, etc.

The motor system 102 includes a brushless direct current (BLDC) motor 104, a rotatable shaft 106 configured to rotate in response to driving the motor 102, and a gear system 107 coupled to the rotatable shaft 106. The BLDC motor 104 includes a first alternative current (AC) input 105a configured to receive a first AC voltage having a first phase, a second AC input 105b configured to receive a second AC voltage having a second phase, and a third AC input 105c configured to receive a third AC voltage having a third phase. The first, second, and third AC voltages are phase-shifted with respect to one another. In at least one non-limiting embodiment, for example, the first, second, and third AC voltages are one-hundred and twenty (120) degrees out of phase with each other.

The gear system 107 is configured to translate the rotational movement of the motor shaft 106 to adjust a panel regulator 114 (or armature). One portion of the panel regulator 114 is coupled to the gear system 107, while a second portion of the panel regulator 114 is coupled to the panel 112. Accordingly, the panel regulator 114 moves the panel 112 in the first direction in response to rotating the rotatable shaft 106 in a first rotational direction and moves the panel 112 in the second direction in response to rotating the rotatable shaft 106 in a second rotational direction opposite the first rotational direction. In one or more non-limiting embodiments the gear system 107 is implemented as a worm drive including a worm screw 109 coupled to a worm gear 110. It should be appreciated, however, that other gear systems can be implemented without departing from the scope of the present invention.

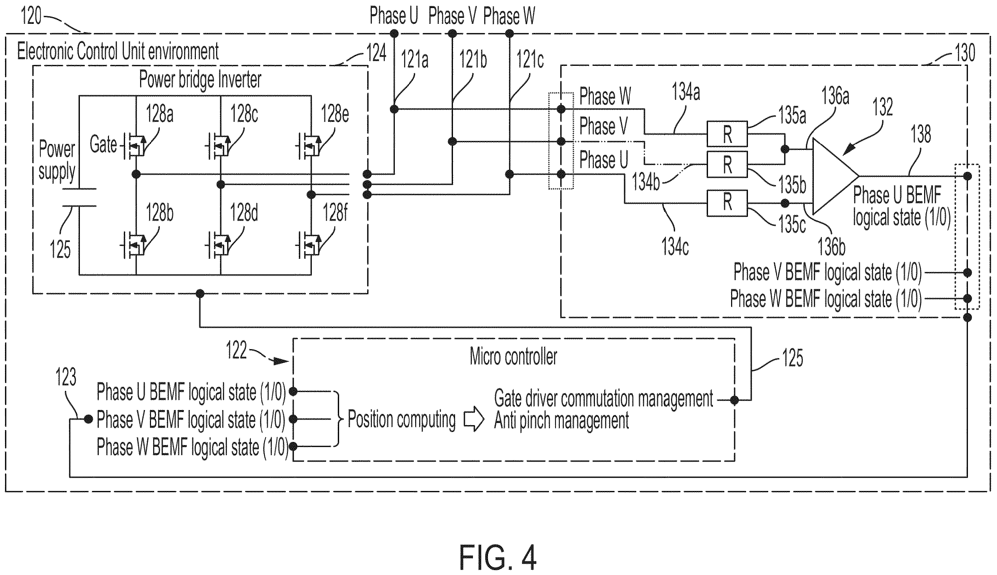

The electronic control unit (ECU) 120 is configured to control the motor system 102. The ECU 120 includes a first AC output 121a configured to output the first AC voltage, a second AC output 121b configured to output the second AC voltage, and a third AC output 121c configured to output the third AC voltage. A non-limiting embodiment of the ECU 120 is illustrated in FIG. 4. The ECU 120 includes a power bridge inverter 124 and a microcontroller 122. The power bridge inverter 124 includes a power supply 125 to supply DC voltage and plurality of switches 128a, 128b, 128c, 128d, 128e and 128f (collectively referred to as switches 128a-128f). The switches 128a-128f operate to convert the DC voltage into the first AC voltage, the second AC voltage and the third AC voltage. According to a non-limiting embodiment, a first pair of the switches 128a and 128b is connected to the first AC output 121a to output the first AC voltage, a second pair of switches 128c and 128d is connected to the second AC output 121b to output the second AC voltage, and a third pair of switches 128e and 128f is connected to the third AC output 121c to output the third AC voltage.

The microcontroller 122 includes memory configured to store software instructions and a processor configured to execute the software instructions to perform various operations including, but not limited to, motor position computing, gate driver commutation management, and anti-pinch management. The microcontroller 122 further includes an output 125 configured to output a timing control signal that switches on and switches off the plurality of switches 128a-128f according to a timing sequence. According to a non-limiting embodiment, the timing sequence switches on and off the first pair of switches 128a and 128b, the second pair of switches 128c and 128d, and the third pair of switches 128e and 128f one-hundred and twenty (120) degrees out of phase with each other. In this manner, the first pair of switches 128a and 128b generates the first AC voltage, the second pair of switches 128c and 128d generates the second AC voltage, and the third pair of switches 128e and 128f generates the third AC voltage.

As described herein, the ECU 120 determines the rotational position of the motor shaft 106 and whether the motor is in synchronization (e.g. in sync) or out of synchronization (e.g., out of sync) based on the BEMF produced by the motor 104. With continued reference to FIG. 2, the ECU 120 includes a motor phase comparator circuit 130 configured to determine a first BEMF associated with the first AC voltage, a second BEMF associated with the second AC voltage and a third BEMF associated with the third AC voltage. The motor phase comparator circuit 130 includes a first phase input 134a, a second phase input 134b, a third phase input 134c, and a comparator 132. The first phase input 134a is connected to the first AC output 121a and receives the first BEMF, the second phase input 134b is connected to the second AC output 121b and receives the second BEMF, and the third phase input 134c is connected to the third AC output 121c and receives the third BEMF.

The comparator 132 includes a first input 136a, a second input 136b, and an output 138. The first input 136a is connected to both the first phase input 134a and the second phase input 134b, while the second input 136b is connected to only the third phase input 134c.

Accordingly, the output 138 outputs a logic "0" value if the sum of 134a and 134b is lower than 134c, or outputs a logic "1" value if the sum of 134a and 134b is higher than 134c. The change of the BEMF comparator's logical output will be interpreted by the microcontroller as a zero crossing event..

Although a single comparator 132 is illustrated, it should be appreciated that the motor phase comparator circuit 130 can include three individual comparators, with each comparator associated with a corresponding phase of the BEMFs, e.g., the first BEMF, the second BEMF, and the third BEMF. In one or more non-limiting embodiments, the comparators include internal or external hysteresis for noise sensitivity robustness. The BEMF comparators can also be properly set to be in the same time robust versus noise, and sensitive enough to detect lowest motor speed rotations. Accordingly, the logical states (0/1) of the three comparators are used to count a number of zero crossing occurrences of the BEMFs and then determine the motor shaft's rotations based on the number of counted zero crossing occurrences. In this manner the position of the moving part 110, e.g., the panel 112.

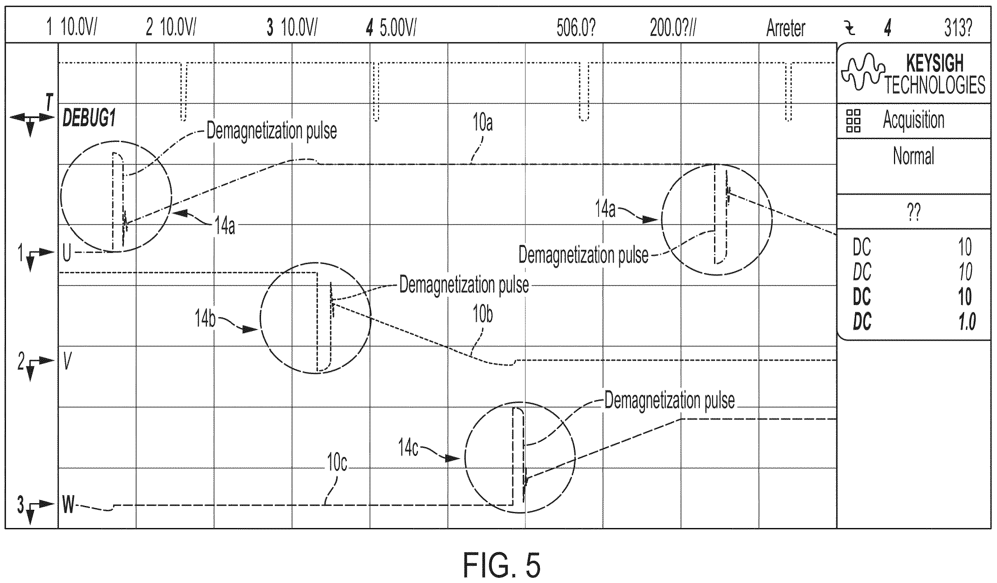

In some instances, the commutation of the motor 104 together with the inverter 124 can produce parasitic pulses. These parasitic pulses are referred to herein as "demagnetization pulses," 14a, 14b, and 14c, which can appear in the first BEMF, the second BEMF, and the third BEMF as shown, for example, in FIG. 5. The demagnetization pulses are typically undesirable because they can cause a faulty detection in the comparator 132, thereby causing a drift in the position estimation of the motor shaft 106.

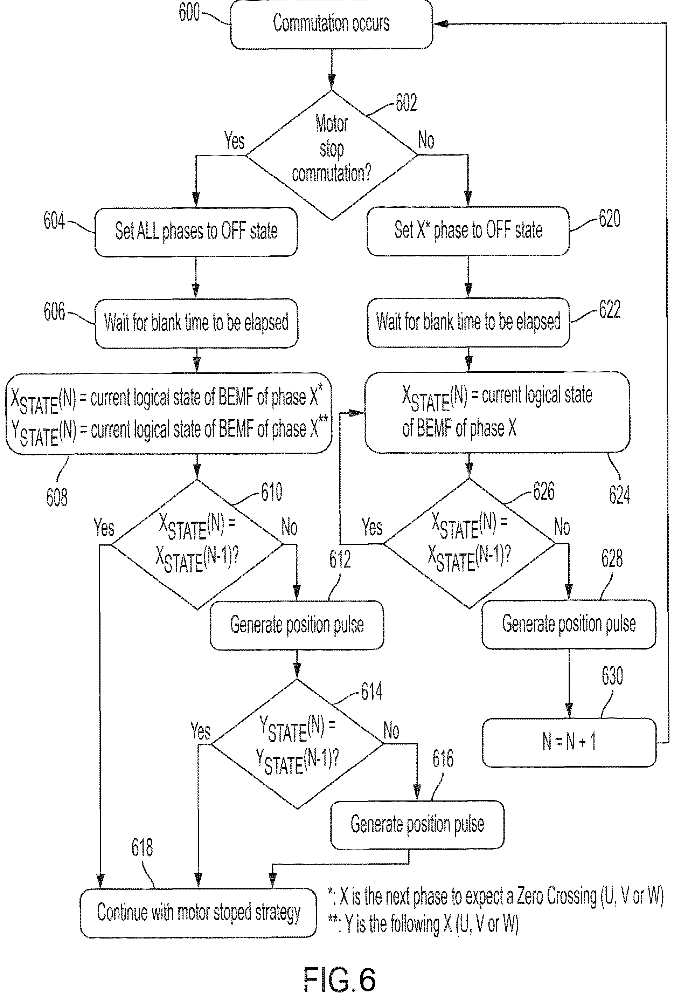

Referring to FIG. 6, a method of generating virtual zero crossing pulses to avoid imprecisions caused by the occurrence of demagnetization pulses is illustrated according to a non-limiting embodiment. At operation 600 commutation (N) of the motor occurs and a determination is made at operation 602 as to whether the commutation stops. When the commutation stops, the first, second and third AC voltages associated with the three-phases of the motor 104 are set to off. At operation 606 a blank time period occurs in order to filter the demagnetization pulse. When the blank time elapses, the micro controller (122) determines the current logical (a) state (Xstate(N)) of the next BEMF phase (e.g., U, V, W) that is expected to experience a zero crossing; and (b) the current logical state (Ystate(N)) of the BEMF phase (e.g., U, V, W) following the next zero crossing phase. For instance, when the commutation sequence order is U-V-W and the next phase to expect a zero crossing is phase U, operation 610 is a comparison of the current BEMF logical state of phase U (Ustate(N)) with the previous BEMF logical state recorded for phase U (Ustate(N-1)). When the BEMF logical state of BEMF phase U has changed (e.g., Ustate(N) ≠ Ustate(N-1)) then a position pulse is generated, and the next operation 614 is the comparison of the current BEMF logical state of BEMF phase V (Vstate(N)) with the previous BEMF logical state recorded for BEMF phase V(vstate(N-1)).

At operation 610, a determination is made as to whether (Xstate(N)) is equal to the (Xstate(N-1)). When the position of the rotor has not changed from a BEMF perspective (e.g., (Xstate(N)) is equal to the (Xstate(N-1))), the method proceeds to operation 618 and continues stopping the motor.. When, however, the position of the rotor has changed from a BEMF perspective (e.g., (Xstate(N)) is not equal to the (Xstate(N-1)), a position pulse is generated at operation 612. At operation 614, a determination is made as to whether (Ystate(N)) is equal to the (Ystate(N-1)).

With continued reference to FIG. 6, the method determines whether the position of the rotor has incremented a first amount, e.g., one-sixth of an electrical cycle (e.g. Xstate(N) is not equal to Xstate(N-1) but Ystate(N) is not equal to Ystate(N-1)), or whether the position of the rotor has incremented a second amount, e.g., one-third of an electrical cycle (e.g., Xstate(N) is not equal to Xstate(N-1) and Ystate(N) is equal to Ystate(N-1)). When Xstate(N) is not equal to Xstate(N-1) but Ystate(N) is not equal to Ystate(N-1)), the position is compensated by 1 position pulse. When e.g., Xstate(N) is not equal to Xstate(N-1) and Ystate(N) is equal to Ystate(N-1)), however, the position is compensated by 2 position pulse.

Referring to operation 614, when (Ystate(N)) is equal to (Ystate(N-1)), the method proceeds to operation 618 and continues stopping the motor. When, however, (Ystate(N)) is not equal to the (Ystate(N-1)), a position pulse is generated at operation 616, and the method and continues stopping the motor at operation 618..

When commutation of the motor is not stopped at operation 602, the voltage associated with the next phase (e.g., U, V, W) that is expected to experience a zero crossing is switched off at operation 620. At operation 622, a blank time period elapses before proceeding to operation 624 and setting the current logical state (Xstate(N)) of the next phase (e.g., U, V, W) that is expected to experience a zero crossing to the current logical state of the BEMF associated with the voltage switched off at operation 620. At operation 626, a determination is made as to whether (Xstate(N)) is equal to the (Xstate(N-1)). When (Xstate(N)) is equal to the (Xstate(N-1)), the method returns to operation 624 and sets the current logical state (Xstate(N)) of the next phase (e.g., U, V, W) that is expected to experience a zero crossing to the current logical state of the BEMF associated with the voltage switched off at operation 620. When, however, the (Xstate(N)) is not equal to the (Xstate(N-1)), a position pulse is generated at operation 628 and the next commutation (N+1) is launched, i.e., "N" is set to "N+1".

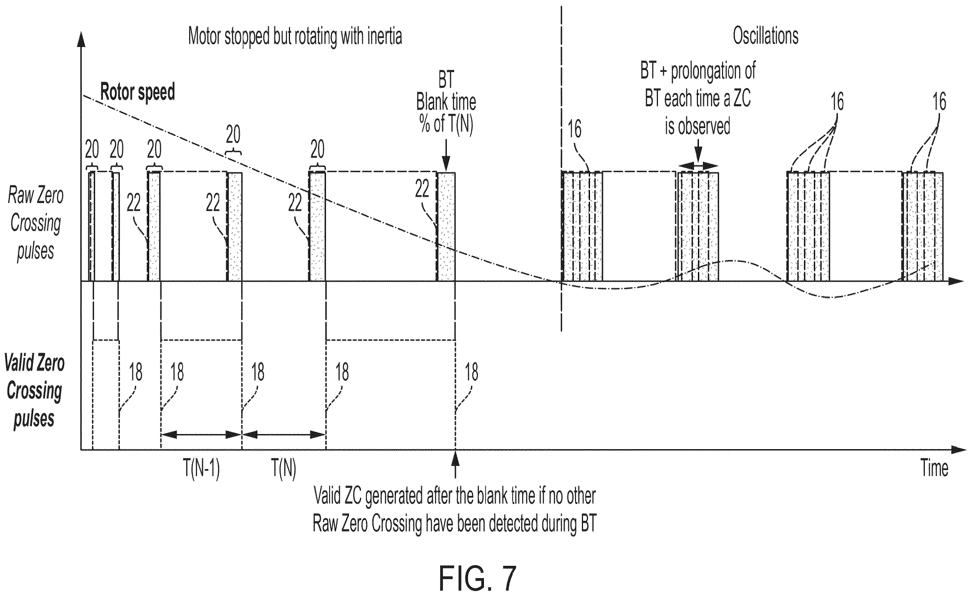

In some instances, the shaft 106 may vibrate during motor stoppage due to the cogging torque, shaft oscillation, and/or juddering occurring in the motor system entire system 102. As shown in FIG. 7, for example, the vibrations can create undesirable pulses 16 in the BEMF, which in turn contribute to false zero crossing detections by the comparator circuit 130. As further shown in FIG. 7, these undesirable vibration zero crossing pulses are characterized by very fast activations followed by a longer sequence with no activation.

According to a non-limiting embodiment, the power moving panel system 100 is configured to filter the undesirable vibration pulses by employing a dedicated method? That can be used when the motor 104 is not driven. As shown in FIG. 7, a valid zero crossing pulse 18 can be generated after waiting a time period referred to herein as a "blank time" 20 that occurs after a raw zero crossing 22. The blank time 20 can be initially set as a percentage of the last commutation time of the motor 104, and the raw zero crossing 22 can be the output generated from the comparator circuit 130. In at least one non-limiting embodiment, the valid zero crossing 18 is generated only if no other raw zero crossings 22 have been detected during a given blank time 20. When a zero crossing is detected during the blank time 20, the blank time 20 restarts from this point. According to a non-limiting embodiment, the duration of the blank time 20 is set to be proportional to the time between two previous valid zero crossings 18.

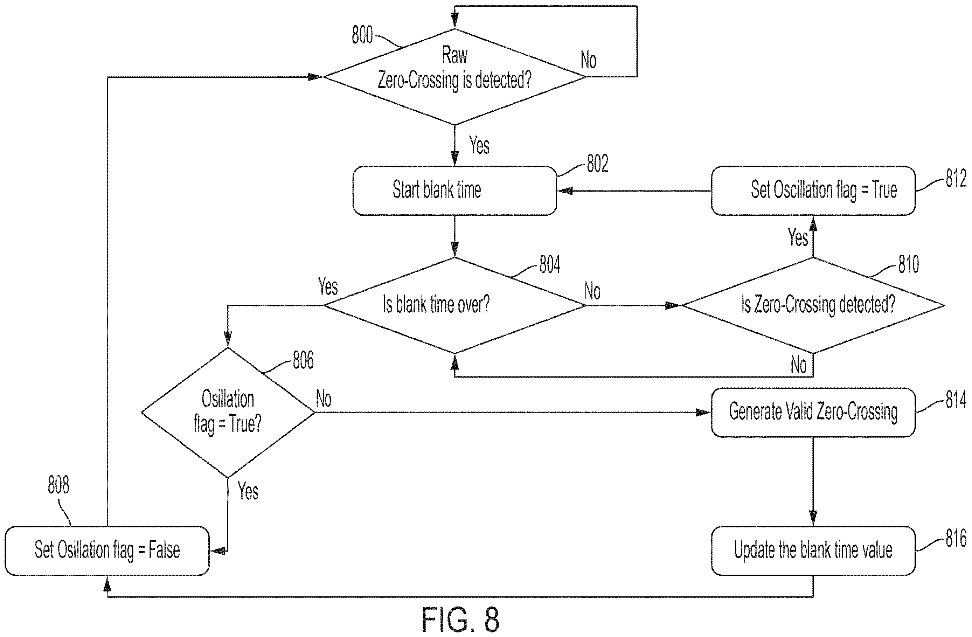

Referring to FIG. 8 a method of filtering erroneous zero crossing pulses from the BEMF of the motor 104 using blank times 20 as described above is illustrated according to a non-limiting embodiment. At operation 800, a determination is made as to whether a zero crossing of the BEMF (e.g., phase U, phase V, or phase W) has occurred. When a zero crossing has not occurred, the method returns to operation 800. When a zero crossing has occurred, however, a blank time period (e.g., blank time 20) discussed herein is initiated. At operation 804, a determination is made as to whether the blank time has elapsed. When the blank time has elapsed, a determination is made as to whether an oscillation flag 806 is set to true indicative a detected oscillation or vibration of the motor. When the oscillation flag is not set to true, the oscillation flag is set to false at operation 808 indicating that oscillation or vibration of the motor has not been detected, and the method returns to operation 800 to continue monitoring for the occurrence of a zero crossing.

When the blank time has not elapsed at operation 804, a determination is made as to whether a zero crossing of the BEMF is detected at operation 810. When a zero crossing of the BEMF is detected, the oscillation flag is set to true at operation 812 indicating an oscillation or vibration of the motor is detected and the method proceeds to initiate the blank time period (e.g., blank time 20) at operation 802. When, however, a zero crossing is not detected at operation 810, the method returns to operation 804 and continues monitoring whether the blank time period has elapsed. The method can then continue as described herein to filter erroneous zero crossing pulses from the BEMF of the motor 104 using blank times 20. The filtered BEMF signals (e.g., first, second and third BEMF signals) can then be used to determine the position of the moveable part 110 based on the rotational position of the rotatable shaft 106 without using a position sensor.

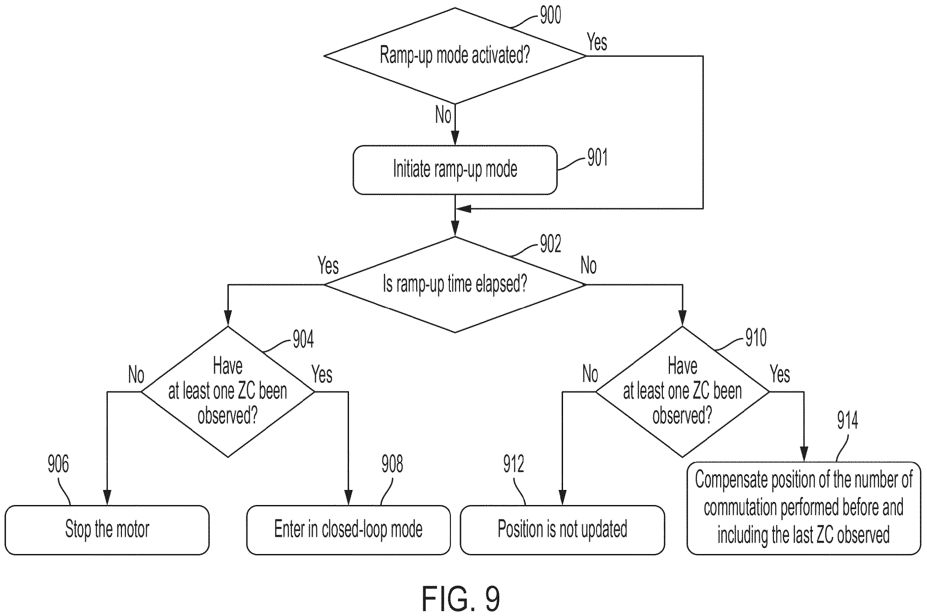

As described herein, the power moving panel system 100 described herein can determine the rotational position of the motor (e.g., motor shaft 106) without using position sensors. Because position sensors are excluded, the power moving panel system 100 performs a method of starting up the motor 104 without using a position sensor as illustrated in FIG. 9. At operation 900, a determination is made as to whether a motor ramp-up mode is activated. The purpose of the ramp-up sequence is to increase the motor's speed high enough for the BEMF pulses to be detected with confidence. Because no BEMF pulse is observed when the motor speed is low, the position management during the ramp-up sequence is effectively an open-loop and is different than the position management in closed-loop. The strategy takes into account several use-cases: the ramp-up phase finishes-up and BEMF pulses are confirmed, the ramp-up finishes-up and BEMF pulses are not confirmed, the ramp-up is stopped but BEMF pulses are confirmed, the ramp-up is stopped but BEMF pulses are not confirmed

When the ramp-up mode is activated, the method proceeds to operation 902 to monitor the ramp-up time. When the ramp-up mode is not activated, the ramp-up mode initiated at operation 901, and a determination is made at operation 902 as to whether a ramp-up time has elapsed. The ramp-up time is set to a time at which when the time elapses, the motor will be rotating at a speed at which the BEMF pulses can be detected by the comparator circuit (e.g., comparator circuit 130). The ramp-up time and the frequency slope can be set according to the motor specifications. When the ramp-up time has elapsed, a determination is made at operation 904 as to whether a zero crossing of the BEMF has occurred. When a zero crossing has not occurred, the motor is stopped at operation 906. When a zero crossing has occurred, however, a closed-loop mode is invoked at operation 908 According to a non-limiting embodiment, the closed-loop mode refers to a commutation mode where the commutation of the motor 104 is done according to the feedback of the BEMF comparator outputs. The open-loop mode (e.g., ramp-up) differs from the closed-loop mode because the commutation does not take into account the feedback of the BEMF comparator outputs.

When, however, the ramp-up time has not elapsed at operation 902, a determination is made as to whether a zero crossing of the BEMF has occurred at operation 910. When a zero crossing has not occurred, the rotational position of the motor is not updated. When a zero crossing has occurred, however, a rotational position of the motor is compensated based on a number of commutations performed before and including the last zero crossing that occurred.

As described herein, a power moving panel system 100 includes a motor system 102 with a brushless direct current (BLDC) motor 104 and a rotatable shaft 106 configured to rotate in response to driving the BLDC motor 104, where the motor system 102 is configured to adjust a position of a moveable part 110 in response to rotating the rotatable shaft 106. A motor phase comparator circuit 130 is in signal communication with the motor system 102. The motor phase comparator circuit 130 is configured to determine a plurality of zero crossing occurrences of a first back electromotive force (BEMF), a second BEMF, and a third BEMF produced in response to driving the motor 106. A microcontroller 122 is in signal communication with the motor phase comparator circuit 130. The microcontroller 122 is configured to determine a rotational position of the rotatable shaft 106 based on the counting of each zero crossing occurrence corresponding to each of the first BEMF, the second BEMF and the third BEMF. The microcontroller 122 determines the position of the moveable part 110 based on the rotational position of the rotatable shaft 106 without using a position sensor. According to at least one non-limiting embodiment, the microcontroller 122 is configured to automatically close and open the moveable part 110 based on the position of the moveable part 110 determined according to rotational position of the motor shaft 106. The automatic automotive regulation operation includes an anti-pinch detection operation, which can automatically stop movement of the moveable part 110 and/or reverse movement of the moveable part 110.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A power moving panel system comprising:
a motor system including a brushless direct current (BLDC) motor and a rotatable shaft configured to rotate in response to driving the BLDC motor, the motor system configured to adjust a position of a moveable part in response to rotating the rotatable shaft.
a motor phase comparator circuit in signal communication with the motor system, the motor phase comparator circuit configured to determine a plurality of zero crossing occurrences of a first back electromotive force (BEMF), a second BEMF, and a third BEMF produced in response to driving the motor; and
a microcontroller in signal communication with the motor phase comparator circuit, the microcontroller configured to determine a rotational position of the rotatable shaft based on the counting of each zero crossing occurrence corresponding to each of the first BEMF, the second BEMF and the third BEMF,
wherein the microcontroller determines the position of the moveable part based on the rotational position of the rotatable shaft.

2. The power moving panel system of claim 1, wherein the microcontroller is configured to automatically close and open the moveable part based on the position of the moveable part.

3. The power moving panel system of claim 2, wherein the automatic automotive regulation operation is an anti-pinch detection operation, the anti-pinch detection operation including at least one of automatically stopping movement of the moveable part and reversing movement of the moveable part.

4. The power moving panel system of claim 1, wherein the microcontroller processes electrical BEMF signals representing the first, second, and third BEMFs, filters from the BEMF signals parasitic voltages caused by one or a combination of a vibration of the motor system and the BLDC motor, and determines the rotational position of the rotatable shaft based on the counted number of zero crossings without using a position sensor.

5. The power moving panel system of claim 4, wherein the motor phase comparator circuit comprises:
a comparator including a first input configured to receive the first BEMF and the second BEMF, a second input configured to receive the third BEMF, and an output configured to output a logic signal that transitions between one of a logic "0" value and a logic "1" value or a logic "1" value and a logic "0" value, either of the transitions indicating the zero crossing occurrence of the first BEMF, the second BEMF, and the third BEMF, respectively.

6. The power moving panel system of claim 5, wherein the microcontroller performs operations comprising:
determines when the motor is one of in synchronization or out of synchronization;
detects a demagnetization pulse occurring in a current BEMF among one of the first BEMF, the second BEMF or the third BEMF when the motor is out of synchronization;
generates a virtual zero crossing pulse in response to detecting the demagnetization pulse, the virtual zero crossing pulse producing the logic signal output from the comparator; and
counts the logic signal output resulting from the virtual zero crossing pulse as the zero crossing occurrence of the current BEMF.

7. The power moving panel system of claim 1, wherein the movable part is a moveable panel.

8. The power moving panel system of claim 1, further comprising:
a gear system coupled to the rotatable shaft; and
a panel regulator including a first end coupled to the gear system and a second end coupled to the moveable panel,
wherein the panel regulator moves the panel in a first direction in response to rotating the rotatable shaft in a first rotational direction and moves the panel in a second direction in response to rotating the rotatable shaft in a second rotational direction opposite the first rotational direction.

9. The power moving panel system of claim 8, wherein the BLDC motor includes a first alternating current (AC) input configured to receive a first AC voltage having a first phase, a second AC input configured to receive a second AC voltage having a second phase, and a AC input configured to receive a third AC voltage having a third phase, the first, second, and third AC voltages being one-hundred and twenty (120) degrees out of phase with each other.

10. The power moving panel system of claim 9, wherein the first AC voltage produces the first BEMF, the second AC voltage produces the second BEMF, and the third AC voltage produces the third BEMF.

11. A method of operating a power moving panel system, the method comprising:
driving a brushless direct current (BLDC) motor and producing a first back electromotive force (BEMF), a second BEMF, and a third BEMF produced in response to driving the motor;
rotating a rotatable shaft of the BLDC motor in response to driving the motor;
adjusting, by the motor system, a position of a moveable part in response to rotating the rotatable shaft;
determining, by a motor phase comparator circuit, a plurality of zero crossing occurrences of the at least one back electromotive force (BEMF);
determining, by a microcontroller in signal communication with the motor phase comparator circuit, a rotational position of the rotatable shaft based on the counting of each zero crossing occurrence corresponding to each of the first BEMF, the second BEMF and the third BEMF; and
determining, by the microcontroller, the position of the moveable part based on the rotational position of the rotatable shaft.

12. The method of claim 11, further comprises performing, by the microcontroller, an automatic closing and opening of the moveable part based on the position of the moveable part.

13. The method of claim 12, wherein the automatic automotive regulation operation is an anti-pinch detection operation, the anti-pinch detection operation including at least one of automatically stopping movement of the moveable part and reversing movement of the moveable part.

14. The method of claim 11, further comprising:
processing by the microcontroller, electrical BEMF signals representing the first, second, and third BEMFs;
filtering from the BEMF signals parasitic voltages caused by one or a combination of a vibration of the motor system and the BLDC motor; and
counting, by the microcontroller, each zero crossing occurrence corresponding to each of the first BEMF, the second BEMF and the third BEMF to determine a counted number of zero crossings.

15. The method of claim 13, wherein counting each zero crossing occurrence comprises:
delivering, to a first input of a comparator, the first BEMF and the second BEMF;
delivering, to a second input of the comparator, the third BEMF; and
outputting, from an output of the comparator, a logic signal that transitions between one of a logic "0" value and a logic "1" value or a logic "1" value and a logic "0" value, either of the transitions indicating the zero crossing occurrence of the first BEMF, the second BEMF, and the third BEMF, respectively.

16. The method of claim 15, further comprising:
determining, by the microcontroller, when the motor is one of in synchronization or out of synchronization;
detecting, by the microcontroller, a demagnetization pulse occurring in a current BEMF among one of the first BEMF, the second BEMF or the third BEMF when the motor is out of synchronization;
generating, by the microcontroller, a virtual zero crossing pulse in response to detecting the demagnetization pulse, the virtual zero crossing pulse producing the logic signal output from the comparator; and
counting, by the microcontroller, the logic signal output resulting from the virtual zero crossing pulse as the zero crossing occurrence of the current BEMF.

17. The method of claim 11, wherein the movable part is a moveable panel.

18. The method of claim 11, further comprising:
coupling a gear system to the rotatable shaft;
coupling a first end of a panel regulator to the gear system and coupling a second end of the panel regulator to the moveable panel; and
moving the panel regulator in a first direction to adjust the position of the panel in a first direction in response to rotating the rotatable shaft in a first rotational direction and moving the panel regulator to adjust the position of the panel in a second direction in response to rotating the rotatable shaft in a second rotational direction opposite the first rotational direction.

19. The method of claim 18, wherein the BLDC motor includes a first alternating current (AC) input configured to receive a first AC voltage having a first phase, a second AC input configured to receive a second AC voltage having a second phase, and a AC DC input configured to receive a third AC voltage having a third phase, the first, second, and third AC voltages being one-hundred and twenty (120) degrees out of phase with each other.

20. The method of claim 19, wherein the first AC voltage produces the first BEMF, the second AC voltage produces the second BEMF, and the third AC voltage produces the third BEMF.
